# EUROPEAN PATENT APPLICATION

(11) **EP 1 561 530 A1**
(43) Date of publication of application: **10.08.2005**
(21) Application number: 03811485.6
(22) Date of filing: 29.08.2003
(51) Int. Cl.: B22F 1/00, B22F 9/20, B22F 9/24, G11B 5/706, G11B 5/714, G11B 5/72, G11B 5/842, H01F 1/06, H01F 1/09

(54) **ALLOY NANO-PARTICLE AND METHOD FOR PRODUCTION THEREOF, AND MAGNETIC RECORDING MEDIUM USING ALLOY NANO-PARTICLE**

(30) Priority: 15.11.2002 JP 2002332637
(71) Applicant: FUJITSU LIMITED, Kawasaki-shi, Kanagawa 211-8588 (JP)
(72) Inventor: MOMOSE, Satoru, C/O FUJITSU LIMITED, Kawasaki-shi, Kanagawa 211-8588 (JP); KODAMA, Hiroyoshi, C/O FUJITSU LIMITED, Kawasaki-shi, Kanagawa 211-8588 (JP); IHARA, Nobutaka, C/O FUJITSU LIMITED, Kawasaki-shi, Kanagawa 211-8588 (JP); UZUMAKI, Takuya, C/O FUJITSU LIMITED, Kawasaki-shi, Kanagawa 211-8588 (JP)
(74) Representative: Fenlon, Christine Lesley
(86) International application number: PCT/JP2003/011074
(87) International publication number: WO 2004/045793

(57) **Abstract**

A method of producing alloy nanoparticles includes the steps of: adding a metallic salt, a reducing agent, a stabilizing ligand, and an organic iron complex to an organic solvent selected from the group consisting of 2-20C hydrocarbon, alcohol, ether, and ester in an inert gas atmosphere to obtain a reaction liquid; and stirring the reaction liquid while heating the reaction liquid to a predetermined temperature. The grain diameter of the alloy nanoparticle is controlled by regulating the amount of the stabilizing ligand.

## Description

### Technical Field

The present invention relates to alloy nanoparticles, a method of producing the same, and a magnetic recording medium using the alloy nanoparticles.

### Background Art

For enhancing the recording density of a magnetic recording medium, it is necessary to render the magnetic clusters of the medium smaller and more uniform and to weaken the magnetic coupling between the adjacent magnetic clusters. For this purpose, it is necessary to reduce and uniformize the crystal grain diameters of the magnetic metal forming the recording layer of the medium and to cover the gaps between the adjacent crystal grains with a nonmagnetic metal. However, where the crystal grain diameter is reduced, the problem called "thermal fluctuation" in which spontaneous magnetization is gradually lost becomes also conspicuous. To cope with these problems, various inventions and improvements have hitherto been made.

As one of the methods for obtaining a magnetic metal in the form of nanometer scale crystals with uniform grain diameters, a chemical synthesis method has been proposed (Science, vol. 287, p. 1989, and Japanese Patent Laid-open No. 2000-48340). The technology consists in chemically synthesizing an FePt alloy having a high magnetic anisotropy and highly resistant to thermal fluctuation. According to this technology, FePt crystal grains are naturally and orderly aligned with the adjacent crystal grains through an organic compound as a medium, which is called "self-assembling", and the crystal grains have grain diameters of about 4 nm and are excellent in dispersion; therefore, the FePt alloy according to this technology is expected as a recording medium of a superhigh-density recording medium.

However, for continued enhancement of the performance of magnetic recording media, a technology for controlling the grain diameter of a magnetic metal is needed, but it has been impossible to freely control the grain diameter in the case of the magnetic alloy nanoparticles obtained by the above-mentioned chemical synthesis method. For example, in the case of FePt nanoparticles, only the conditions for obtaining particles with a grain diameter of 3 to 4 nm have been known. Therefore, in order to obtain nanoparticles with a different grain diameter, it has been necessary to add the raw material to a liquid dispersion of the once synthesized nanoparticles, and to perform the reaction again, thereby growing the particles. By this method, naturally, it is impossible to obtain particles with grain diameters smaller than the grain diameter of 3 to 4 nm of the particles initially synthesized.

The FePt alloy displays magnetism by the change of the fcc crystal structure to the fct structure through ordering. The ordering needs annealing; annealing of a substrate coated with FePt makes it possible for FePt to acquire a high coercive force. In general, there is a correlation between the annealing temperature and the coercive force, and the coercive force increases with a rise in the annealing temperature (Science, vol. 287, p. 1989). It has been reported, however, that annealing at a high temperature causes bonding between the adjacent nanoparticles, resulting in the formation of crystals greater in grain diameter (Applied Physics Letters, vol. 79, No. 26, p. 4393). When the grain diameter is enlarged by the bonding between crystal grains, the average grain diameter of the crystal grains is enlarged, and the variance of the grain diameter is also enlarged, with the result that the advantage of nanoparticles is lost.

### DISCLOSURE OF THE INVENTION

Accordingly, it is an object of the present invention to provide a method of producing alloy nanoparticles by which it is possible to arbitrarily control the grain diameter of the alloy nanoparticles being synthesized.

It is another object of the present invention to provide a magnetic recording medium in which alloy nanoparticles are applied to a recording medium without increasing the grain diameter of alloy nanoparticles or the variance of grain diameter.

In accordance with one aspect of the present invention, there are provided FePt alloy nanoparticles having an average diameter in the range of 1 to 3 nm. In addition to Fe and Pt, the FePt alloy nanoparticles may contain an element selected from the group consisting of Ni, Co, Cu, Ag, Mn, and Pb.

In accordance with another aspect of the present invention, there is provided a method of producing alloy nanoparticles, including the steps of: adding a metallic salt, a reducing agent, a stabilizing ligand, and an organic iron complex to an organic solvent selected from the group consisting of 2-20C hydrocarbon, alcohol, ether, and ester in an inert gas atmosphere to obtain a reaction liquid; and stirring the reaction liquid while heating the liquid to a predetermined temperature, wherein the grain diameter of the alloy nanoparticles is controlled by the amount of the stabilizing ligand.

The stabilizing ligand is selected from the group consisting of carboxylic acid, sulfonic acid, sulfinic acid, phosphonic acid, and amine. Preferably, the organic iron complex is selected from the group consisting of Fe(CO)₅, Fe₂(CO)₉, and Fe₃(CO)₁₂. Preferably, the metallic salt is selected from the group consisting of bisacetylacetonatoplatinum, bisbenzonitrileplatinum dichloride, platinum(II) bromide, platinum(II) chloride, and platinum(II) iodide.

In accordance with a further aspect of the present invention, there is provided a magnetic recording medium including: a substrate; an FePt alloy nanoparticle layer containing FePt alloy nanoparticles which are disposed at substantially uniform intervals on the substrate and have an average diameter of 1 to 3 nm; and a protective film formed on the FePt alloy nanoparticle layer.

In accordance with yet another aspect of the present invention, there is provided a magnetic recording medium including: a substrate; a nanoparticle magnetic layer containing FePt alloy nanoparticles which are disposed at substantially uniform intervals on the substrate, and have an average diameter of 2 to 10 nm, and a carbon phase filling the voids between the FePt alloy nanoparticles; and a protective film formed on the nanoparticle magnetic layer, wherein the proportion of the number of carbon atoms contained in the carbon phase based on the sum of the number of metallic atoms constituting the FePt alloy nanoparticles and the number of the carbon atoms is in the range of from 50 at%, inclusive, to 85 at%, exclusive.

In accordance with a yet further aspect of the present invention, there is provided a method of manufacturing a magnetic recording medium, including the steps of: dispersing FePt alloy nanoparticles and an organic mixture containing a carboxylic acid and an amine in a solvent selected from the group consisting of hexane, heptane, and octane, to obtain a coating liquid; applying the coating liquid to a substrate; drying the coating liquid to form, on the substrate, a magnetic nanoparticle layer comprised of the FePt alloy nanoparticles and the organic mixture filling the voids between the FePt alloy nanoparticles; permitting a salt to be formed between the carboxylic acid and the amine; and annealing the magnetic nanoparticle layer.

The step of permitting a salt between the carboxylic acid and the amine is composed of the step of maintaining the magnetic nanoparticle layer in N2 gas for not less than 5 days, or is composed of the step of subjecting the magnetic nanoparticle layer to a baking treatment at a temperature of not lower than the boiling point of the solvent for a period of 5 to 60 min, or is composed of the step of maintaining the magnetic nanoparticle layer in a vacuum for not less than 1 hr.

In accordance with still another aspect of the present invention, there is provided a method of manufacturing a magnetic recording medium, including the steps of: dispersing FePt alloy nanoparticles and an organic mixture containing a carboxylic acid and an amine in a solvent selected from the group consisting of hexane, heptane, and octane, to obtain a coating liquid; applying the coating liquid to a substrate; drying the coating liquid to form, on the substrate, a magnetic nanoparticle layer comprised of the FePt alloy nanoparticles and the organic mixture filling the voids between the FePt alloy nanoparticles; forming a carbon cap on the magnetic nanoparticle layer; and annealing the magnetic nanoparticle layer. A carbon substrate layer may be formed on the substrate, instead of forming the carbon cap on the magnetic nanoparticle layer.

In accordance with a still further aspect of the present invention, there is provided a magnetic recording medium including: a substrate; a carbon layer formed on the substrate; a magnetic nanoparticle layer formed on the carbon layer and having an average grain diameter in the range of 2 to 10 nm and an inter-grain interval in the range of 0.2 to 5 nm; and a carbon protective film formed on the magnetic nanoparticle layer, wherein the magnetic nanoparticle layer is comprised of a plurality of mutually separated nanoparticles having a grain diameter variance of not more than 10%.

Preferably, the film thickness of the carbon layer is in the range of 1 to 10 nm, and the film thickness of the carbon protective film is in the range of 1 to 5 nm.

### BRIEF DESCRIPTION OF THE DRAWINGS

FIGS. 1A to 1G are graphs showing the relationship between the amount of a stabilizing ligand used and grain diameter;
FIG. 2 is a sectional schematic diagram of a perpendicular magnetic recording medium according to a first embodiment of the present invention;
FIG. 3 is a sectional schematic diagram showing a longitudinal magnetic recording medium according to a second embodiment of the present invention;
FIG. 4 is a general schematic diagram of a spin coating apparatus;
FIG. 5 is a general schematic diagram of the spin coating apparatus in a hermetically sealed condition;
FIG. 6 is an illustration of a spin coating method;
FIG. 7A is a micrograph showing the surface condition of a nanoparticle layer before annealed;
FIG. 7B is a micrograph showing the surface condition of the nanoparticle layer annealed on the 17th day after film formation;
FIG. 7C is a micrograph showing the surface condition of the nanoparticle layer annealed on the 59th day after film formation;
FIG. 8 shows a reflection FT-IR spectrum on the 17th day after film formation;
FIG. 9 shows a reflection FT-IR spectrum on the 59th day after film formation;
FIG. 10A is a micrograph showing the surface condition of a nanoparticle layer before annealed, of a medium provided with a carbon cap;
FIG. 10B is a micrograph showing the surface condition of the nanoparticle layer after annealed with electron beams for 1 hr;
FIG. 11A is a micrograph showing the surface condition of a nanoparticle layer before annealed, of a medium not provided with a carbon cap;
FIG. 11B is a micrograph showing the surface condition of the nanoparticle layer after annealed with electron beams for 1 hr;
FIG. 12A is a micrograph showing the surface condition of a thin film after annealed;
FIG. 12B is a micrograph showing the surface condition of a thick film after annealed;
FIG. 13 is a diagram showing the annealing temperature dependence of coercive force Hc;
FIG. 14 is a micrograph showing the surface condition of a thin film annealed at 800°C;
FIG. 15A is a micrograph showing the surface condition of a nanoparticle layer after baked;
FIG. 15B is a micrograph showing the surface condition of a nanoparticle layer after annealed;
FIG. 16 is a sectional schematic diagram of a perpendicular magnetic recording medium according to a third embodiment of the present invention;
FIG. 17 is a sectional schematic diagram of a longitudinal magnetic recording medium according to a fourth embodiment of the present invention;
FIG. 18 is a sectional schematic diagram of a perpendicular magnetic recording medium according to a fifth embodiment of the present invention;
FIG. 19A is a micrograph of a nanoparticle layer before annealed;
FIG. 19B is a micrograph of the nanoparticle layer after annealed;
FIG. 20 is a micrograph of a medium not provided with a carbon intermediate layer nor a carbon protective layer.

### BEST MODE FOR CARRYING OUT THE INVENTION

The present invention is based on the finding that, in chemical synthesis of nanoparticles using a reaction liquid, the size of the nanoparticles can be controlled by regulating the saturation concentration of a metal in the reaction liquid. In the synthesis of nanoparticles, as the reaction proceeds, the amount of the metal for constituting the nanoparticles increases in the reaction liquid, and the alloy nanoparticles starts being formed when the concentration of the metal has exceeded its saturation concentration. In this case, if the saturation concentration of the metal in the reaction liquid is high, it is difficult for aggregates of the metal atoms functioning as nuclei of the nanoparticles to be formed, with the result that the number of the aggregates is small and, therefore, the individual nanoparticles grow to large sizes. On the contrary, in a reaction liquid in which the saturation concentration of the metal is low, the nanoparticles formed are small in grain diameter.

The saturation concentration of the metal in the reaction liquid can be varied by varying the amount of a stabilizing ligand (stabilizer) used in the synthesis reaction. In organic solvents such as ethers, alcohols, esters and hydrocarbons, the saturation concentration of a metal is extremely low. Therefore, the saturation concentration of the metal in the reaction liquid depends not on the concentration but on the absolute amount, of the stabilizing ligand in the reaction liquid. Accordingly, the present invention is characterized in that the grain diameter of nanoparticles is controlled by the absolute amount of the stabilizing ligand used.

According to one embodiment of the present invention, there is provided a method of producing alloy nanoparticles. The method of producing alloy nanoparticles includes the steps of: adding a metallic salt, a reducing agent, a stabilizing ligand, and an organic iron complex to an organic solvent selected from the group consisting of 2-20C hydrocarbon, alcohol, ether, and ester to obtain a reaction liquid; and stirring the reaction liquid while heating the reaction liquid to a predetermined temperature. Further, the method is characterized in that the grain diameter of the alloy nanoparticles is controlled by the amount of the stabilizing ligand. Examples of the stabilizing ligand which can be used include 6-22C carboxylic acids, sulfonic acids, sulfinic acids, and phosphonic acids. Further examples of the stabilizing ligand include basic organic compounds such as 6-22C amines.

Particularly preferred examples are oleic acid, which is one of the carboxylic acids having a high ability to disperse metal particulates in the liquid, and oleylamine which has the same carbon chain as that of oleic acid and is similar to oleic acid in chemical properties. The acid and the amine may be used singly or may simultaneously be used in combination. The combination of oleic acid and oleylamine is particularly preferable. The heating temperature for the reaction liquid is preferably in the range of 220 to 260°C. The organic iron complex is preferably Fe(CO)₅, Fe₂(CO)₉, or Fe₃(CO)₁₂. The metallic salt may be bisacetylacetonatoplatinum, bisbenzonitrileplatinum dichloride, platinum(II) bromide, platinum(II) chloride, or platinum(II) iodide.

Now, the present invention will be described below, based on specific examples.

### Example 1

In an argon gas atmosphere, 20 mL of dioctyl ether was added to a flask charged with 197 mg (0.5 mmol) of bisacetylacetonatoplatinum and 390 mg of 1,2-hexadecanediol. Further, 0.32 mL (1.0 mmol) of oleic acid and 0.34 mL (1.0 mmol) of oleylamine were added to the mixture, and then 0.13 mL (1.0 mmol) of Fe(CO)₅ was added to the mixture, to obtain a reaction liquid.

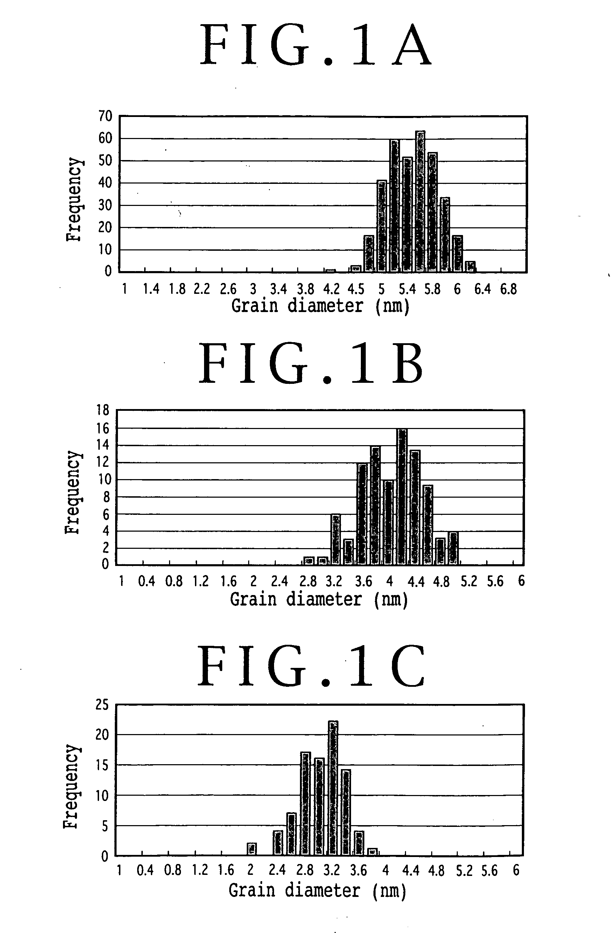

After the reaction liquid was brought into reaction by stirring it at 230°C for 30 min, the reaction mixture was allowed to cool to room temperature, and 40 mL of ethanol was added to the reaction mixture, followed by centrifugation. Further, the precipitate was dispersed in hexane, to obtain a dispersion of FePt alloy nanoparticles. The FePt alloy nanoparticles obtained under these conditions had an average grain diameter of 4.3 nm. The grain diameter of the FePt alloy nanoparticles can be controlled by varying the amounts of oleic acid and oleylamine used in the above-mentioned synthetic reaction. The variation in the grain diameter of the FePt alloy nanoparticles obtained by varying only the amounts of oleic acid and oleylamine, among the above-mentioned reaction conditions, is shown in Table 1 and in FIGS. 1A to 1G.

**Table 1**

| Amount of oleic acid used | Amount of oleylamine used | Average grain diameter of FePt nanoparticles | Variance of grain diameter |
|---|---|---|---|
| 0.01 mL | 0.01 mL | 1.6 nm | 19% |
| 0.02 mL | 0.02 mL | 2.1 nm | 17% |
| 0.04 mL | 0.04 mL | 2.6 nm | 18% |
| 0.08 mL | 0.08 mL | 3.0 nm | 11% |
| 0.16 mL | 0.17 mL | 3.3 nm | 10% |
| 0.32 mL | 0.34 mL | 4.3 nm | 12% |
| 0.64 mL | 0.68 mL | 5.5 nm | 8% |

FIGS. 1A to 1G are graphs showing the influence of the amounts of oleic acid and oleylamine used on the grain diameter of the FePt nanoparticles formed, in terms of the relationship between the diameter of the nanoparticles and the occurrence frequency. FIG. 1A shows the grain diameter distribution in the case of where 0.64 mL of oleic acid and 0.68 mL of oleylamine were used, with the average grain diameter being 5.5 nm. FIG. 1B shows the grain diameter distribution in the case where 0.32 mL of oleic acid and 0.34 mL of oleylamine were used, with the average grain diameter being 4.3 nm. FIG. 1C shows the grain diameter distribution in the case where 0.16 mL of oleic acid and 0.17 mL of oleylamine were used, with the average grain diameter being 3.3 nm.

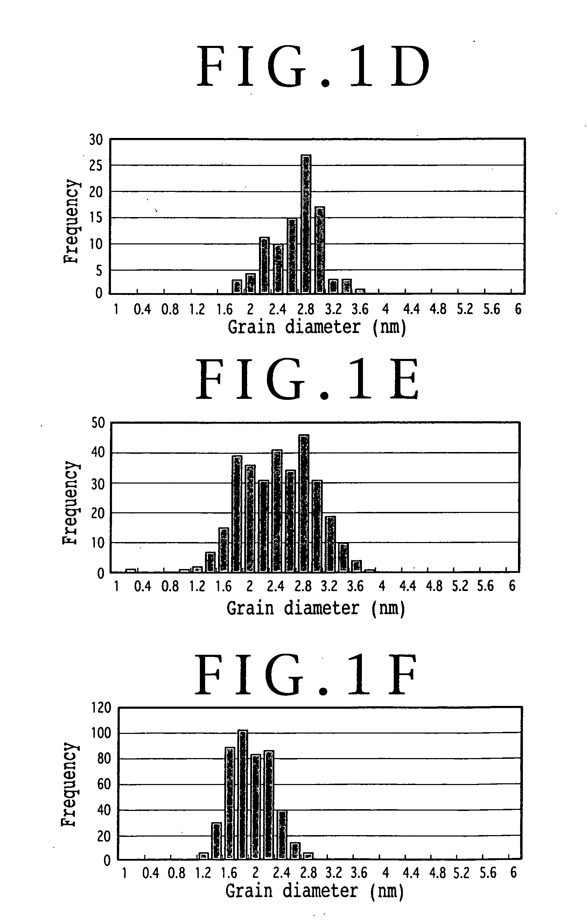

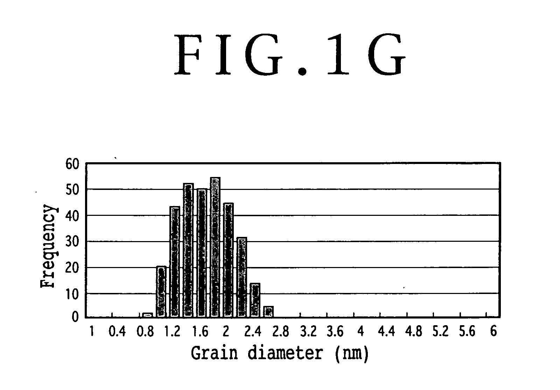

FIG. 1D shows the grain diameter distribution in the case where 0.08 mL of oleic acid and 0.08 mL of oleylamine were used, with the average grain diameter being 3.0 nm. FIG. 1E shows the grain diameter distribution in the case where 0.04 mL of oleic acid and 0.04 mL of oleylamine were used, with the average grain diameter being 2.6 nm. FIG. 1F shows the grain diameter distribution in the case where 0.02 mL of oleic acid and 0.02 mL of oleylamine were used, with the average grain diameter being 2.1 nm. FIG. 1G shows the grain diameter distribution in the case where 0.01 mL of oleic acid and 0.01 mL of oleylamine were used, with the average grain diameter being 1.6 nm.

As is clear from Table 1 and FIGS. 1A to 1G, the average grain diameter of the FePt nanoparticles could be controlled according to the amount of the stabiling ligand added to the reaction liquid. Namely, the amount of the stabilizing ligand used and the average grain diameter of the FePt nanoparticles are roughly in a proportional relationship.

### Example 2

A synthetic reaction was carried out under the same conditions as in Example 1, except that 28.8 mg (0.11 mmol) of bisacetylacetonatocopper was further added to the same reaction liquid as that in Example 1. Regarding the relationship between the amount of the stabilizing ligand used and the grain diameter, the equivalent results to those in Example 1 were obtained. The nanoparticles synthesized in this case are FePtCu alloy nanoparticles.

### Example 3

A synthetic reaction was carried out under the same conditions as in Example 1, except that 23.4 mg (0.14 mmol) of silver(I) acetate was further added to the same reaction liquid as that in Example 1. Regarding the relationship between the amount of the stabilizing ligand used and the grain diameter, the equivalent results to those in Example 1 were obtained. The nanoparticles synthesized in this case are FePtAg alloy nanoparticles.

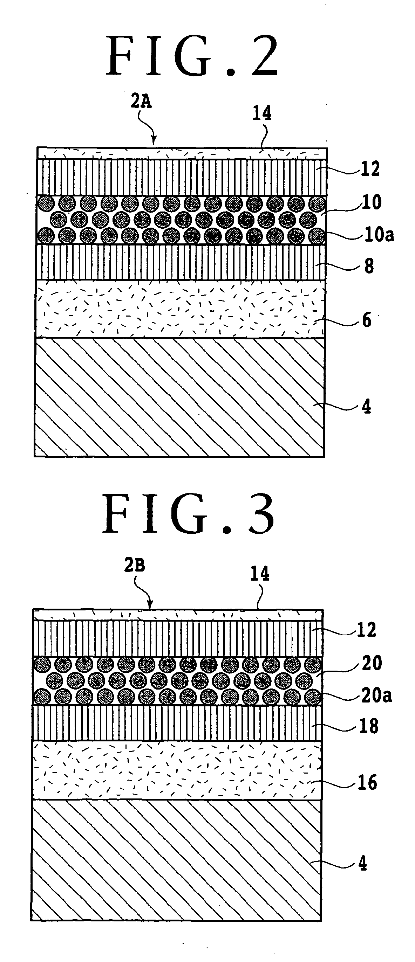

Referring to FIG. 2, there is shown a sectional schematic diagram of a perpendicular magnetic recording medium 2A according to a first embodiment of the present invention in which the FePt alloy nanoparticles produced by the method of the present invention are used to form a recording layer. A soft magnetic layer 6 composed of FeSi, FeTaC or the like is formed on a substrate 4 such as Al-tempered glass, crystallized glass, etc. An intermediate layer 8 composed of carbon, MgO or the like is formed on the soft magnetic layer 6.

An FePt alloy nanoparticle layer 10 having an average grain diameter of 1 to 3 nm is formed on the intermediate layer 8 by a chemical synthesis method. The FePt alloy nanoparticle layer 10 is magnetized in the perpendicular direction, and the FePt alloy nanoparticles 10a are disposed at substantially uniform intervals. A carbon protective film 12 is formed on the FePt alloy nanoparticle layer 10, and a lubricant 14 is applied to the carbon protective film 12.

Referring to FIG. 3, there is shown a sectional schematic diagram of a longitudinal magnetic recording medium 2B according to a second embodiment of the present invention in which the FePt alloy nanoparticles are used to form a recording layer. A substrate layer 16 composed of NiP or the like is formed on a substrate 4 such as Al-tempered glass, crystallized glass, etc. An intermediate layer 18 composed of CrMo or the like is formed on the substrate layer 16. An FePt alloy nanoparticle layer 20 magnetized in the longitudinal direction (in-plane direction) is formed on the intermediate layer 18. The FePt alloy nanoparticles 20a have an average grain diameter of 1 to 3 nm, and are disposed at substantially uniform intervals. A carbon protective film 12 is formed on the FePt alloy nanoparticle layer 20, and a lubricant 14 is applied to the carbon protective layer 12.

In the first and second embodiments shown in FIGS. 2 and 3, the FePt alloy nanoparticle layer 10 and 20 may be composed of an alloy nanoparticle layer containing Fe, Pt, and an element selected from the group consisting of Ni, Co, Cu, Ag, Mn, and Pb. In this case, the alloy nanoparticles have an average grain diameter of 2 to 6 nm, preferably 2 to 3 nm, and are disposed at substantially uniform intervals. At the time of annealing, thickening of the grain diameter of the nanoparticles occurs, for the following reason. Where the alloy nanoparticles make contact with each other at a high temperature, mutual fusing of the particles to reduce the specific surface area thereof and to thereby lower the surface energy thereof is advantageous, on an energy basis, to maintaining the independence of the nanoparticles.

Therefore, in order to maintain the independent condition of the nanoparticles, means for inhibiting the mutual contact of the nanoparticles is needed. One example of the means is a method in which an organic compound capable of enduring the annealing conditions is mixed into the liquid dispersion of the nanoparticles, and the resultant mixture is applied to a substrate. The organic compound dissolved uniformly in the liquid dispersion is capable of evenly filling the voids between the nanoparticles after coating, and the organic compound in the voids is converted into amorphous carbon under appropriate annealing conditions, to impart a high durability to the nanoparticle layer.

As an organic compound suited to the above-mentioned purpose, there can be mentioned a combination of a carboxylic acid with an amine functioning as a basic organic compound. A carboxylic acid and an amine can be firmly bonded to each other by formation of a salt, resulting in the effect of inhibiting the mutual contact of the nanoparticles. As the carboxylic acid, particularly, oleic acid is preferred since it is excellent as a dispersant for metal particulates. As the basic organic compound to be used in combination with oleic acid, preferred is oleylamine, which has the same molecular main chain length as that of oleic acid and is similar to oleic acid in chemical properties.

By combining oleic acid and oleylamine, which have high affinity to each other, it is possible to make uniform the mixed condition of the organic compound in the gaps between the nanoparticles while stably dispersing the alloy nanoparticles. It should be noted here that in the case of a nanoparticle medium, the FePt alloy nanoparticles as well as the carboxylic acid and the amine are dissolved in an organic solvent such as hexane, heptane, and octane and the solution is applied to a substrate; in this case, the proportions of the carboxylic acid and the amine that are forming the salt immediately upon the coating, based on the total amounts of the carboxylic acid and the amine, are low. In view of this, various method have been investigated for achieving effective formation of the salt between the carboxylic acid and the amine. As a result of the investigation, it has been found that the following methods are effective.
(1) After the application of the liquid mixture to the substrate, the assembly is left to stand in N₂ gas for not less than 5 days, before annealing. The annealing temperature is in the range of about 400 to 900°C, preferably 500 to 800°C. The annealing time is about 30 min to about 2 hr.
(2) After the application of the liquid mixture to the substrate, the assembly is held in a vacuum for not less than 1 hr, for complete evaporation of the residual solvent, before annealing.
(3) After the application of the liquid mixture to the substrate, the assembly is subjected to a baking treatment for 5 to 60 min at a temperature of not lower than the boiling point of the organic solvent, for complete evaporation of the residual solvent, before annealing.

Other than the above, examples of the measure to restrain the mutual fusing of the FePt alloy nanoparticles include the following methods.
(1) The nanoparticle layer containing the nanoparticles, the carboxylic acid, and the amine is made to have a uniform thickness of not more than 80 nm, preferably in the range of 5 to 20 nm. As the method for applying the liquid mixture, there can be used a spin coating method and a dipping method.
(2) The annealing is conducted in a vacuum of 10⁻³ Pa or below.

In addition, a method of physically restraining the FePt alloy nanoparticles from moving has been confirmed to be effective to a certain extent. Examples of this method include the following ones.
(1) After the liquid mixture containing the FePt alloy nanoparticles, the carboxylic acid, and the amine is applied to the substrate to form the nanoparticle layer, a carbon protective film is formed on the nanoparticle layer by a sputtering method or a vapor deposition method.
(2) A carbon substrate layer is formed on the substrate for the purpose of enhancing the affinity of the FePt alloy nanoparticles and the substrate to each other, and the liquid mixture containing the FePt alloy nanoparticles, the carboxylic acid, and the amine is applied to the carbon substrate layer.

Besides, investigations have been conducted by variously changing the ratio between the amount of the FePt alloy nanoparticles and the amount of the organic compound containing the carboxylic acid and the amine. As a result of the investigations, it has been found out that, when the proportion of the number of carbon atoms filling the voids between the FePt nanoparticles in the nanoparticle layer containing the FePt alloy nanoparticles after annealing based on the sum of the number of metal atoms constituting the nanoparticles and the number of the carbon atoms is not less than 50 atm%, a high effect of restraining the mutual fusing of the FePt nanoparticles is obtained. On the other hand, on a magnetic characteristic basis, the density of the FePt nanoparticles in the nanoparticle layer must be not less than a certain level. In view of the above, the proportion of the number of carbon atoms is preferably in the range of from 50 at%, inclusive, to 85 at%, exclusive.

### Example 4

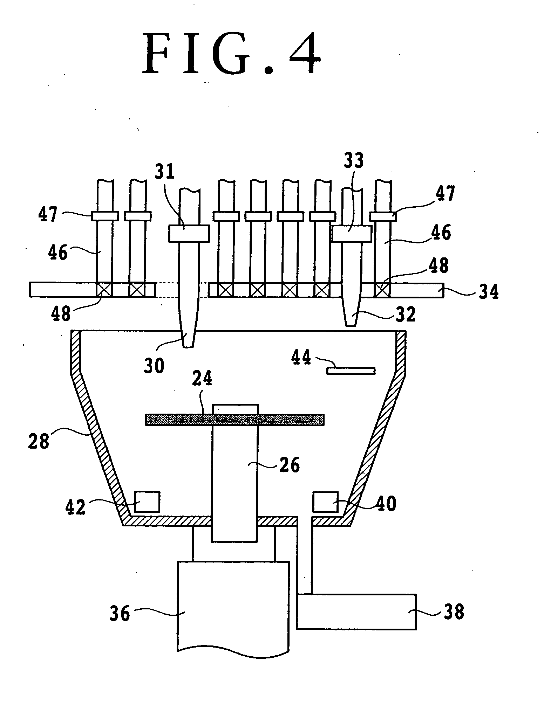

For forming the magnetic metal, a coating liquid was used which was obtained by dispersing FePt alloy nanoparticles, a carboxylic acid, and an amine in hexane. As the organic solvent, heptane or octane may be used in place of hexane. The formation of the nanoparticle layer on a substrate was conducted by use of a spin coating apparatus as shown in FIG. 4. FIG. 4 shows a general schematic diagram of the spin coating apparatus in an opened condition, wherein the basis structure is composed of a hermetic sealing cup 28 through which a disk substrate rotating mechanism 26 for holding and rotating a disk substrate 24 is passed, and a hermetic sealing plate 34 through which a coating liquid syringe 30 and a hexane syringe 32 are passed.

At a bottom portion of the hermetic sealing cup 28, a cup vertical movement mechanism 36 for forming a hermetically sealed space by vertically moving the hermetic sealing cup 28 and bringing it into contact with the hermetic sealing plate 34 is provided. Incidentally, one of the contact portions of the hermetic sealing cup 28 and the hermetic sealing plate 34 is provided with gas-tight sealing means such as an O-ring. An oil-free pump 38 for evacuating the hermetically sealed space to a vacuum is connected to the hermetic sealing cup 28 through a piping. A Pirani gage 40 for measuring the degree of vacuum in the hermetically sealed space and a hexane vapor pressure sensor 42 for measuring the vapor pressure of hexane introduced as a solvent are disposed in the hermetic sealing cup 28.

The coating liquid syringe 30 is fitted with a controller 31 for controlling the dropping amount of the coating liquid. Further, the coating liquid syringe 30 is provided with a mechanism for rectilinearly moving the coating liquid syringe 30 in the radial direction of the substrate 24 while maintaining the gas-tight structure. The hexane syringe 32 is provided with a mass flow controller 33 for controlling the amount of hexane introduced, and a hot plate 44 is disposed on the lower side of the hexane syringe 32. The hexane dropped is evaporated by being heated by the hot plate 44, to fill the hermetically sealed space with a hexane atmosphere.

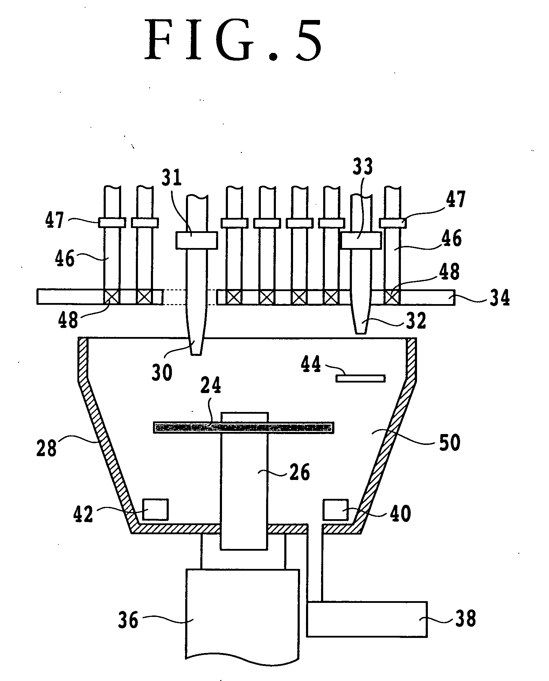

In addition, the hermetic sealing plate 34 is provided with a plurality of conductance valves 48 connected to a plurality of gas inlet pipes 46, respectively, and each of the gas inlet pipes 46 is provided with a mass flow controller 47 for controlling the flow rate of N₂ gas. FIG. 5 shows a general schematic diagram of the spin coating apparatus in a hermetically sealed condition, wherein a hermetically sealed film forming chamber 50 can be formed by vertically moving the hermetic sealing cup 28 by the cup vertical movement mechanism 36 to bring the hermetic sealing cup 28 into contact with the hermetic sealing plate 34.

In the spin coating apparatus as above, the disk substrate 24 consisting of an annular silicon substrate having an outside diameter of 65 mm and an inside diameter of 20 mm was fixed to the disk substrate rotating mechanism 26 by vacuum suction, and the disk substrate 24 was rotated at 300 rpm. Next, for obtaining a hermetically sealed structure in the surroundings of the disk substrate 24, the cup vertical movement mechanism 36 was driven to move the hermetic sealing cup 28 upwards, and to bring the hermetic sealing cup 28 into contact with the hermetic sealing plate 34, thereby forming the hermetically sealed film forming chamber 50, as shown in FIG. 5.

Hexane, in an amount of 100 mL, was introduced from the hexane syringe 32 into the hermetically sealed film forming chamber 50, and the hot plate 44 was heated to about 80°C to evaporate hexane, thereby preliminarily providing a hexane atmosphere in the hermetically sealed film forming chamber 50. Next, 200 *µ* L of a coating liquid prepared by dispersing FePt nanoparticles and an organic compound containing a carboxylic acid and an amine in hexane used as a solvent was dropped from the coating liquid syringe 30 over a period of 5 sec.

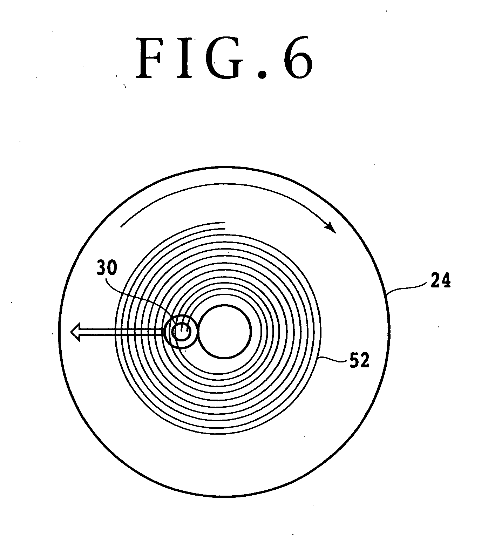

The dropping of the coating liquid was conducted while moving the coating liquid syringe 30 at a velocity of 0.5 cm/sec in the radial direction indicated by an arrow in FIG. 6 under the condition where the disk substrate 24 is rotated at a low speed of 60 rpm, as shown in FIG. 6. As a result, the coating liquid 52 was dropped in a volute pattern relative to the disk substrate 24. Subsequently, the disk substrate 24 was rotated at 1000 rpm for 10 sec, to spread the coating liquid 52 over the entire surface of the disk substrate 24. During this spin coating step, the hermetically sealed film forming chamber 50 is filled with the hexane vapor, so that hexane contained in the coating liquid 52 would not be evaporated.

Next, for drying the residual hexane present on the substrate surface, N₂ gas was introduced via the gas inlet pipes 46 and the conductance valves 48 into the hermetically sealed film forming chamber 50 at a flow rate of 10 sccm for 120 sec, in the condition where the disk substrate 24 is rotated at 300 rpm, to thereby evaporate the hexane contained in the coating liquid 52. In this case, since the plurality of gas inlet pipes 46 are distributed roughly evenly in the plane, the N₂ gas collides uniformly on the entire surface of the disk substrate 24, and the evaporation of hexane occurs slowly and uniformly on the entire surface of the disk substrate 24, so that it is possible to form a nanoparticle layer in which the FePt alloy nanoparticles are aligned orderly and in a uniform thickness. In this example, it was possible to form a nanoparticle film having a film thickness of about 20 nm.

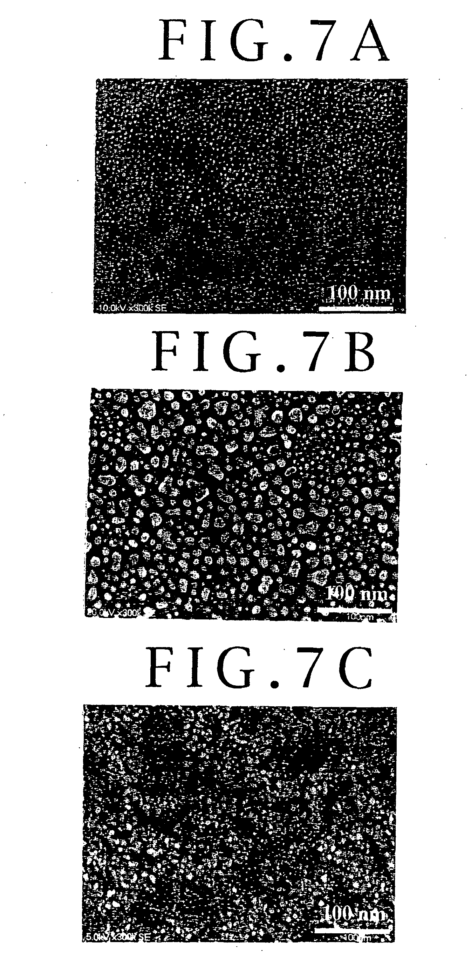

Next, the substrate with the film formed thereon was transferred into a desiccator provided with N₂ gas flow, and was left to stand at room temperature. FIGS. 7A to 7C show the surface conditions of the film after annealed, according to the lapse of time. FIG. 7A shows the surface condition of the film before annealed, FIG. 7B shows the surface condition of the film annealed on the 17th day after film formation, and FIG. 7C shows the surface condition of the film annealed on the 59th day after film formation. The annealing was carried out by holding at 550°C and 1×10⁴ Pa for 30 min. The composition of the nanoparticles was Fe₅₃Pt₄₇. The nanoparticles annealed after 17 days, shown in FIG. 7B, show the thickening and aggregation of the particles. On the other hand, the nanoparticles annealed after 59 days, shown in FIG. 7C, show no thickening and no aggregation of the particles.

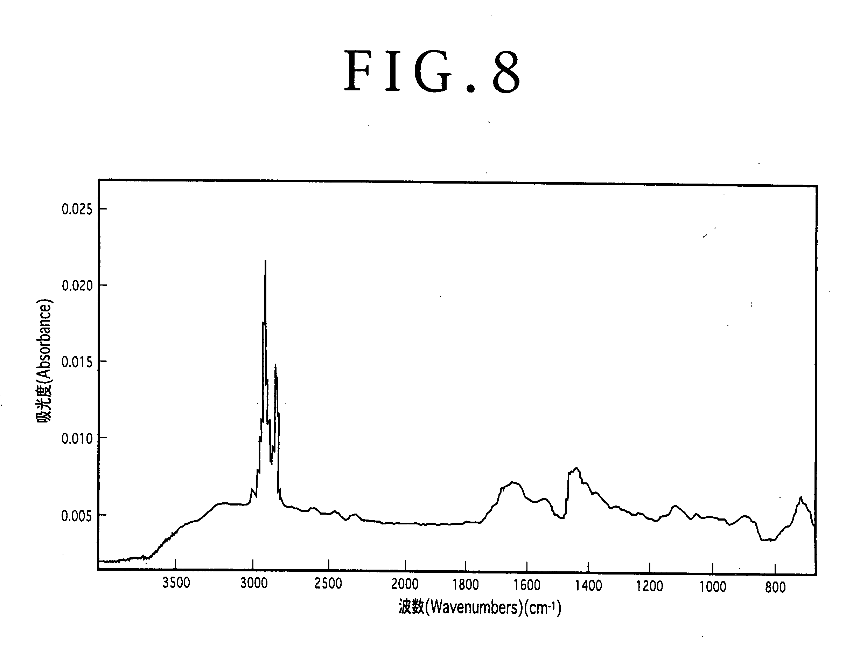

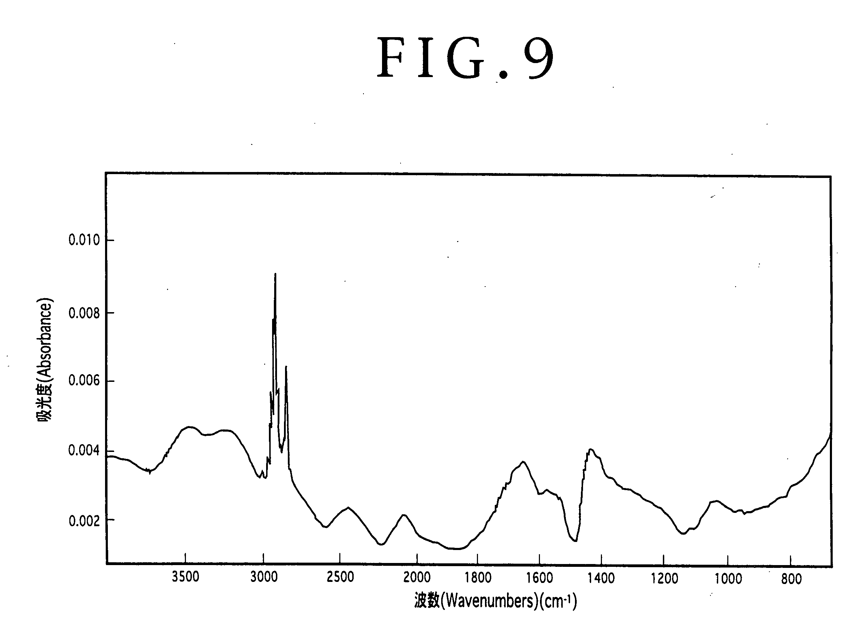

Observation of the reflection FT-IR spectrum was conducted after the substrate with the film formed thereon was left to stand in N₂ gas for 17 days, and 59 days, to obtain the spectra shown in FIGS. 8 and 9, respectively. As is clear from the comparison between FIG. 8 and FIG. 9, the wide absorptions near 2100 cm⁻¹ and near 2800 cm⁻¹, which were not observed on the 17th day, were observed on the 59th day, and a wide absorption was also appearing at 2400 cm⁻¹ in the manner of corresponding thereto.

These absorptions correspond to the angular change motion of the N-H bond in the cation generated from the amine, and, accordingly, it was confirmed that the carboxylic acid and the amine in the film had formed a salt. In addition, the sample annealed after 59 days was analyzed by Rutherford backscattering, by which the proportion of the number of carbon atoms in the film based on the sum of the number of metal atoms in the film and the number of the carbon atoms in the film was found to be 71 atm%. The same type of experiments were carried out by variously changing the ratio of the sum of the amounts of oleic acid and oleylamine to the amount of the nanoparticles. As a result of the experiments, it was found that the proportion of the carbon atoms in the film in the samples in which the nanoparticles keep a good independent condition was not less than 56 atm%, and that even a sample with a carbon atom proportion of 51 atm% showed greatly less fusing of particles than a sample with a carbon atom proportion of 47 atm%.

### Example 5

The film formation of an FePt alloy nanoparticle layer was conducted in the same conditions as in Example 4. Next, a carbon protective film with a film thickness of 5 nm was formed on the nanoparticle layer by a sputtering method. Specifically, a sample was set in a chamber, the film forming chamber was evacuated to 10⁻⁵ Pa, then Ar was introduced to a pressure of 0.5 Pa, and DC discharge at 400 W was conducted, to form the carbon protective film to the thickness of 5 nm.

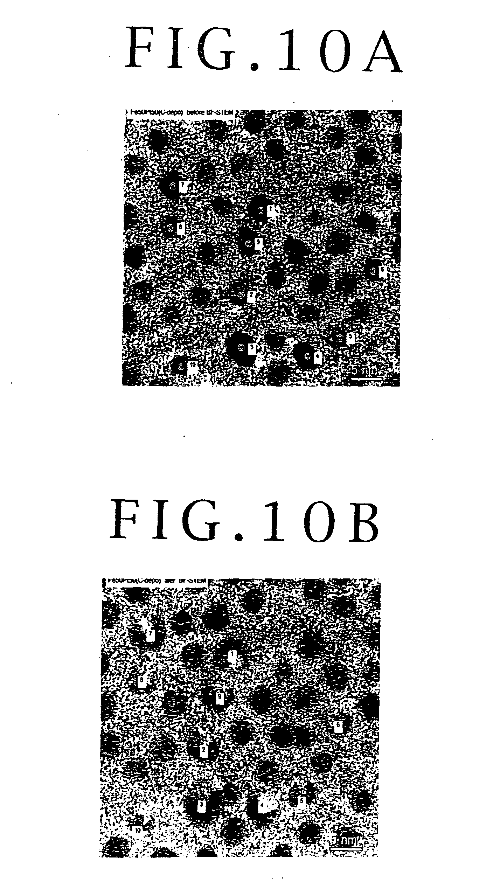

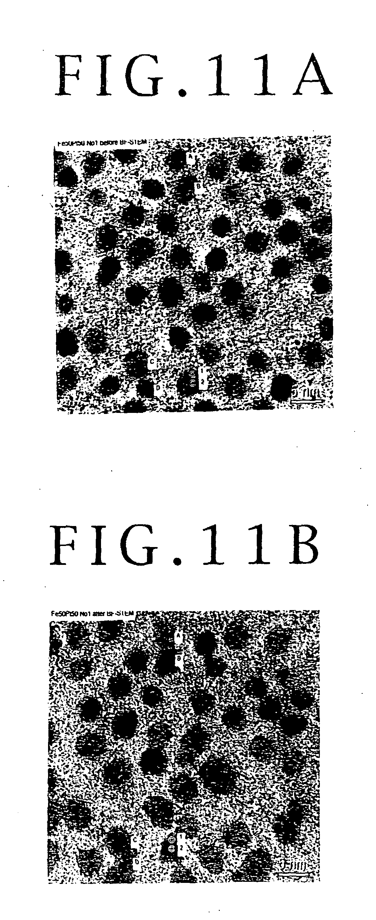

The sample with the carbon film thereon (with carbon cap) and a sample without the carbon film thereon (without carbon cap) were observed under a transmission electron microscope (TEM) while conducting irradiation with an electron beam. The electron beam was condensed to a beam diameter of about 2 nm. FIG. 10A is a TEM photograph of the sample with carbon cap before annealed, and FIG. 10B is a TEM photograph of the sample with carbon cap after annealed with electron beams for 1 hr. On the other hand, FIG. 11A is a TEM photograph of the sample without carbon cap before annealed, and FIG. 11B is a TEM photograph of the sample without carbon cap after annealed with electron beams for 1 hr.

As shown in FIG. 11B, in the sample without carbon cap, the nanoparticles were annealed with the electron beams, and were thereby thickened and aggregated. On the other hand, in the sample with carbon cap, no aggregation of the nanoparticles occurred, as shown in FIG. 10B. While the carbon cap was formed on the nanoparticle layer in this example, the same effect can be expected also when a carbon substrate layer is formed on the substrate and the nanoparticle layer is formed on the carbon substrate layer.

### Example 6

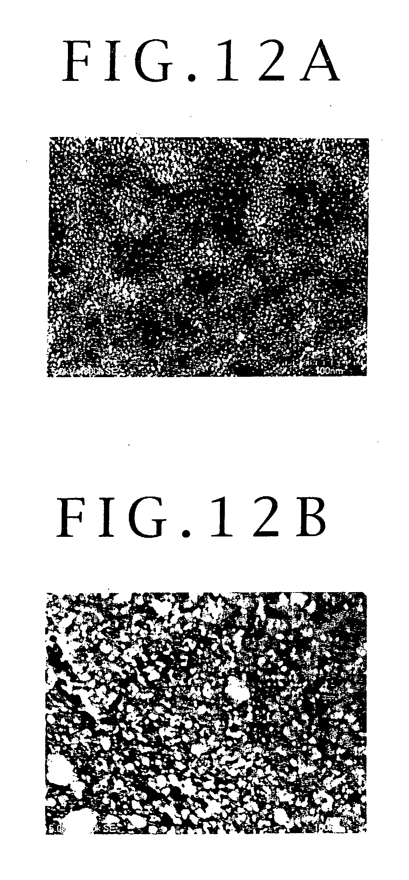

The film formation of an FePt nanoparticle layer was conducted in the same conditions as in Example 4. This sample is used as a thin film sample. Next, 20 *µ* L of an FePt coating liquid was dropped on a 5×10 mm thermal oxide filmed Si substrate, and was slowly dried to prepare a thick film sample provided with a 150 nm thick film. The thin film sample and the thick film sample were simultaneously placed in a heat treatment furnace, were heated in vacuum to 700°C, and were held at that temperature for 30 min, for annealing. FIG. 12A shows a TEM photograph of the surface of the thin film, and FIG. 12B shows a TEM photograph of the surface of the thick film.

It is seen that in the thick film shown in FIG. 12B, the nanoparticles were aggregated and thickened, while in the thin film shown in FIG. 12A, no aggregation of the nanoparticles occurred. The same type of experiments were conducted by preparing various samples while changing the film thickness. As a result of the experiments, it was found out that aggregation of the nanoparticles does not occur when the film thickness is 80 nm or below. Preferably, the film thickness of the nanoparticle layer is in the range of 5 to 20 nm.

### Example 7

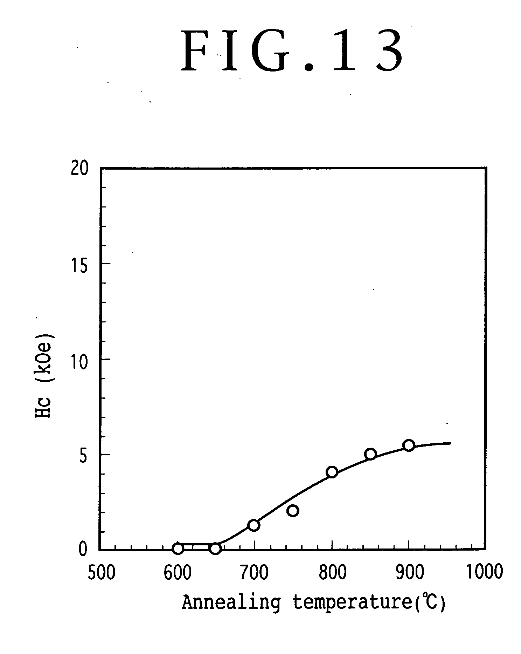

The film formation of an FePt alloy nanoparticle layer was conducted in the same conditions as in Example 4. In this example, suppression of aggregation of the nanoparticles while obtaining a high coercive force will be described. Thin film samples were annealed for 30 min in a vacuum at temperatures of 600, 650, 700, 750, 800, 850, and 900°C, respectively. FIG. 13 shows the relationship between annealing temperature and coercive force. In the thin film samples, the coercive force is saturated at an annealing temperature of 850°C, reaching 6 kOe.

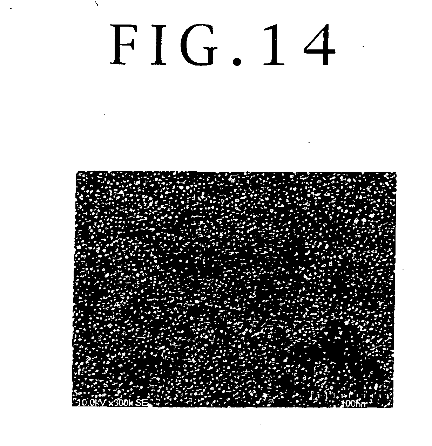

The surface condition of the thin film annealed at 800°C is shown in FIG. 14. It is clear from FIG. 14 that the nanoparticles were not aggregated. The coercive force of the sample free of aggregation is not more than one half of the coercive force of the sample in which the nanoparticles have been aggregated; this is the result of the thermal fluctuation phenomenon occurring due to the small size of the nanoparticles. In the case of thin films, the nanoparticles are influenced by thermal fluctuation because of their small grain diameter, with the result that the temperature variation of coercive force is steep.

### Example 8

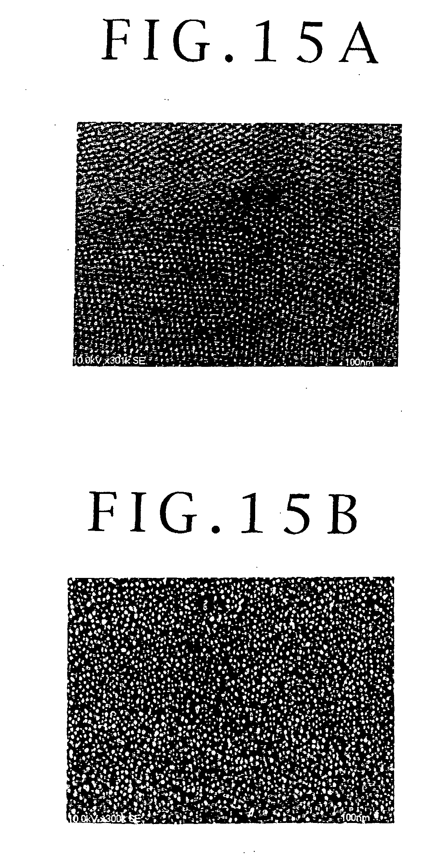

The film formation of an FePt alloy nanoparticle layer was conducted under the same conditions as in Example 4 above. Next, in order to accelerate the coupling of oleic acid and oleylamine to form a salt, a baking treatment was conducted in N₂ gas at 200°C for 5 to 60 min. FIG. 15A shows the surface condition after the baking. Further, vacuum annealing was conducted at 800°C for 30 min. The surface condition after the annealing is shown in FIG. 15B. It is seen that the nanoparticles were not aggregated but remained separate from each other even upon the 800°C annealing, since the salt had been formed by the above-mentioned baking treatment.

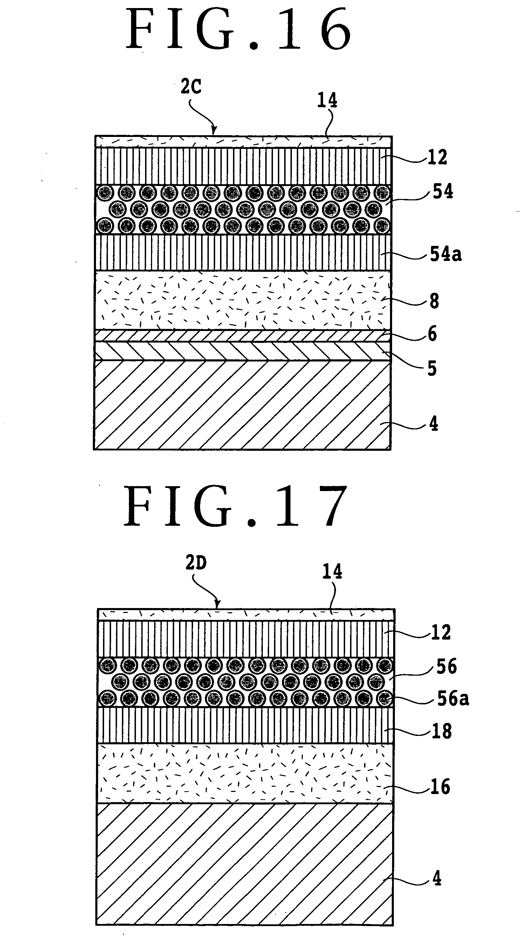

Referring to FIG. 16, there is shown a schematic diagram of a perpendicular magnetic recording medium according to a third embodiment of the present invention in which the above-mentioned FePt alloy nanoparticle layer is adopted as a recording layer. Substantially the same components as those in the recording media in the first and second embodiments are denoted by the same symbols as used above. An orientation control layer 5 for a soft magnetic layer 6 is formed on a substrate 4, and the soft magnetic layer 6 is formed on the orientation control layer 5. An intermediate layer 8 is formed on the soft magnetic layer 6, and a nanoparticle magnetic layer 54 is formed on the intermediate layer 8.

The nanoparticle magnetic layer 54 contains FePt alloy nanoparticles 54a having an average diameter of 2 to 10 nm, and amorphous carbon filling the voids between the nanoparticles 54a. The FePt alloy nanoparticles 54a are disposed at substantially uniform intervals. The nanoparticle magnetic layer 54 is magnetized in the perpendicular direction. A carbon protective film 12 is formed on the nanoparticle magnetic layer 54, and a lubricant 14 is applied to the carbon protective layer 12.

FIG. 17 shows a schematic diagram of a longitudinal magnetic recording medium according to a fourth embodiment of the present invention in which an FePt alloy nanoparticle layer is adopted as a recording layer. Substantially the same components as those in the first to third embodiments are denoted by the same symbols as used above. A substrate layer 16 composed of NiP or the like is formed on a substrate 4, and an intermediate layer 18 is formed on the substrate layer 16. A nanoparticle magnetic layer 56 is formed on the intermediate layer 18.

The nanoparticle magnetic layer 56 contains FePt alloy nanoparticles 56a having an average diameter of 2 to 10 nm, and amorphous carbon filling the voids between the nanoparticles 56a. The FePt alloy nanoparticles 56a are disposed at substantially uniform intervals. The nanoparticle magnetic layer 56 is magnetized in the longitudinal direction (in-plane direction). A carbon protective film 12 is formed on the nanoparticle magnetic layer 56, and a lubricant 14 is applied to the carbon protective layer 12.

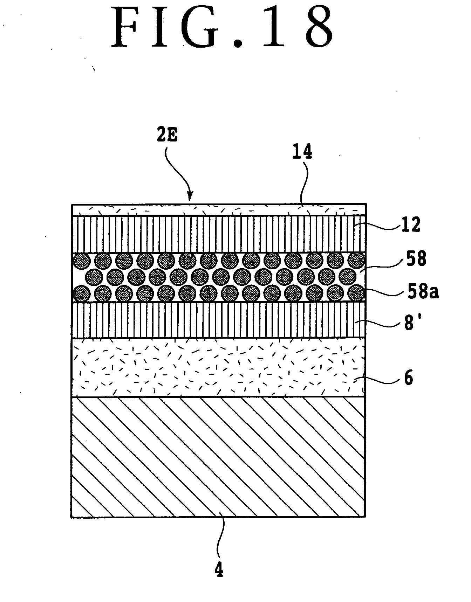

Referring to FIG. 18, there is shown a schematic diagram of a perpendicular magnetic recording medium according to a fifth embodiment of the present invention. The same components as those in the first to fourth embodiments above are denoted by the same symbols as used above. A soft magnetic layer 6 formed of FeTaC or the like is formed on a substrate 4, and a carbon intermediate layer 8' is formed on the soft magnetic layer 6. The film thickness of the soft magnetic layer 6 is 200 nm, while the film thickness of the carbon intermediate layer 8' is 5 nm, and both were formed by a sputtering method. The film thickness of the carbon intermediate layer 8' is preferably in the range of 1 to 10 nm.

A magnetic nanoparticle layer 58 is formed on the carbon intermediate layer 8'. The magnetic nanoparticle layer 58 is formed by a chemical synthesis method, in the same manner as in the above-described embodiments. The magnetic nanoparticle layer 58 contains a plurality of mutually separated nanoparticles 58a having a grain diameter variance of not more than 10%. The magnetic nanoparticles 58a in the magnetic nanoparticle layer 58 have an average grain diameter of 2 to 10 nm, and the inter-grain interval is in the range of 0.2 to 5 nm. The magnetic nanoparticles 58a contain at least two elements selected from the group consisting of Fe, Pt, Ni, Co, Cu, Ag, Mn, and Pb. Preferably, the magnetic nanoparticles 58a consist of FePt nanoparticles.

The magnetic nanoparticle layer 58 further contains a stabilizing ligand (stabilizer) which fills the voids between the magnetic nanoparticles 58a and which is selected from the group consisting of carboxylic acids, sulfonic acids, sulfinic acids, phosphonic acids, and amines. A carbon protective film 12 is formed on the magnetic nanoparticle layer 58 by a sputtering method. The carbon protective film 12 has a film thickness of 1 to 5 nm; in this embodiment, the film thickness was 5 nm. A sample with the magnetic nanoparticle layer 58 sandwiched between the carbon intermediate layer 8' and the carbon protective film 12 was placed in an annealing chamber, the chamber was evacuated to a vacuum of 3×10⁻⁵ Pa, the temperature was raised to 800°C over a period of 10 min, the temperature of 800°C was maintained for 30 min, then the temperature was lowered to room temperature, and the sample was taken out. Thereafter, a lubricant 14 was applied to the carbon protective film 12.

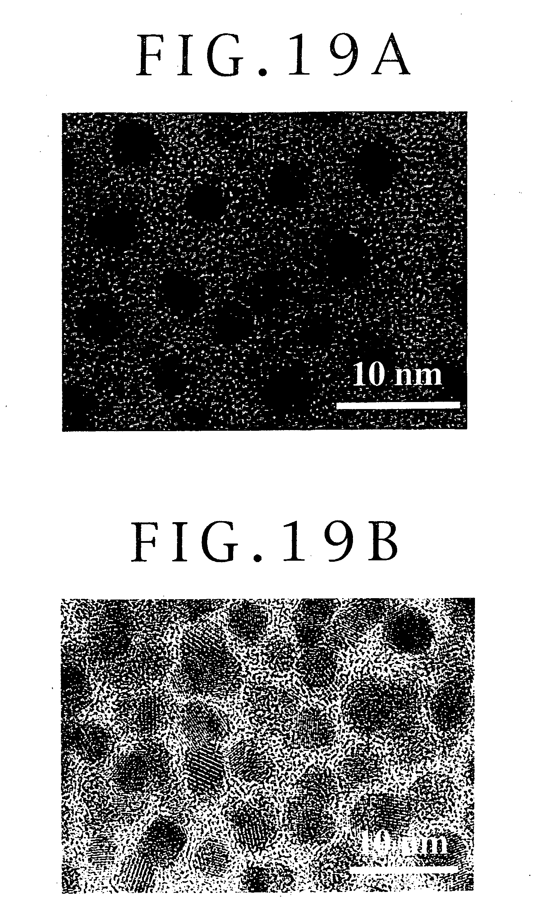

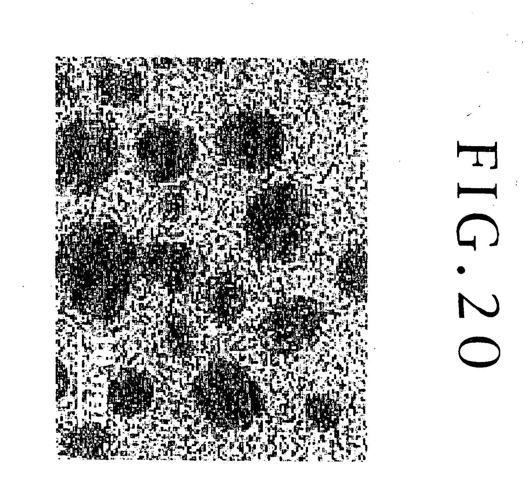

FIG. 19A shows a TEM image of the nanoparticle layer before annealed. FIG. 19B shows a TEM image of the nanoparticles after annealed. For comparison, FIG. 20 shows a TEM image of a nanoparticle layer after annealed, of a medium provided with neither the intermediate layer 8' nor the carbon protective film 12. As is clear from FIG. 19B, in the case where the carbon intermediate layer 8' and the carbon protective film 12 are present, mutual fusing of the nanoparticles is not observed even upon annealing. On the other hand, in the case of lacking the carbon intermediate layer and the carbon protective film as shown in FIG. 20, the nanoparticles are found to have grown larger through mutual fusing.

Table 2 shows the average grain diameter D, the standard deviation σ of grain diameter, and grain diameter variance σ/D, before and after annealing.

**Table 2**

| | Average grain diameter D (nm) | Standard Deviation variance σ (nm) | Grain diameter σ/D(%) |
|---|---|---|---|
| With C intermediate layer and C protective film; after annealing | 4.2 | 0. 41 | 10 |
| With C intermediate layer and C protective film; before annealing | 4.2 | 0. 34 | 8 |

Although the grain diameter variance is slightly larger after the annealing, the average grain diameter D is not changed by the annealing. This can be interpreted that movement of the nanoparticles was restrained by the carbon intermediate layer 8' and the carbon protective film 12 and, therefore, the mutual fusing of the nanoparticles was prevented.

Next, in order to examine the effect of only the carbon intermediate layer 8', a medium provided with neither the carbon intermediate layer 8' nor the carbon protective film 12 and a medium provided with a 5 nm thick carbon intermediate layer 8' but not provided with the carbon protective film were prepared. These medium samples were placed in an annealing chamber, the chamber was evacuated to a vacuum of 3×10⁻⁵ Pa, the temperature was raised to 800°C over a period of 10 min, the temperature of 800°C was maintained for 30 min, then the temperature was lowered to room temperature, and the medium samples were taken out. Table 3 shows the average grain diameters D, the standard deviations σ of grain diameter, and the grain diameter variances σ/D, in the case where the carbon intermediate layer is present and in the case where the carbon intermediate layer is absent.

**Table 3**

| | Average Grain diameter D(nm) | Standard deviation o (nm) | Grain diameter variance σ/D(%) |
|---|---|---|---|
| Without C intermediate layer; after annealing | 32 | 28 | 88 |
| With C intermediate layer; after annealing | 26 | 21 | 81 |

In this experiment, for emphasizing the effect, the amount of the stabilizing ligand was set to be half the ordinary amount, and, as a result, the growth of the nanoparticles to greater particles is made to be conspicuous. In the medium with the carbon intermediate layer, the average grain diameter is smaller, and the mutual fusing of the nanoparticles is suppressed, as compared with the case of the medium without the carbon intermediate layer. This can be interpreted that the hydrocarbon of the stabilizing ligand is bound to the carbon intermediate layer strongly, and the hydrocarbon is carbonized by the annealing to be strongly bound to the carbon intermediate layer 8', whereby movements of the nanoparticles are restrained, and, as a result, the mutual fusing of the nanoparticles is suppressed.

### INDUSTRIAL APPLICABILITY

According to the present invention, it is possible to control the grain diameter of nanoparticles and to realize a reduction in the noises in a magnetic recording medium. Besides, it is possible to obtain a high coercive force while preventing the aggregation and thickening of the nanoparticles. As a result, it is possible to produce a superhigh-density magnetic recording medium.

## Claims

1. FePt alloy nanoparticles having an average diameter in the range of 1 to 3 nm.

2. Alloy nanoparticles containing Fe, Pt, and an element selected from the group consisting of Ni, Co, Cu, Ag, Mn, and Pb, and
having an average diameter in the range of 2 to 6 nm.

3. A method of producing alloy nanoparticles, comprising the steps of:
adding a metallic salt, a reducing agent, a stabilizing ligand, and an organic iron complex to an organic solvent selected from the group consisting of 2-20C hydrocarbon, alcohol, ether, and ester in an inert gas atmosphere to obtain a reaction liquid; and
stirring said reaction liquid while heating said liquid to a predetermined temperature,
wherein the grain diameter of said alloy nanoparticles is controlled by the amount of said stabilizing ligand.

4. The method of producing alloy nanoparticles as set forth in claim 3, wherein said stabilizing ligand is selected from the group consisting of carboxylic acid, sulfonic acid, sulfinic acid, phosphonic acid, and amine.

5. The method of producing alloy nanoparticles as set forth in claim 3, wherein said predetermined temperature is in the range of 220 to 260°C.

6. The method of producing alloy nanoparticles as set forth in claim 3, wherein said organic iron complex is selected from the group consisting of Fe(CO)₅, Fe₂ (CO)₉, and Fe₃(CO)₁₂.

7. The method of producing alloy nanoparticles as set forth in claim 3, wherein said metallic salt is selected from the group consisting of bisacetylacetonatoplatinum, bisbenzonitrileplatinum dichloride, platinum(II) bromide, platinum(II) chloride, and platinum(II) iodide.

8. A magnetic recording medium comprising:
a substrate;
an FePt alloy nanoparticle layer containing FePt alloy nanoparticles which are disposed at substantially uniform intervals on said substrate and have an average diameter of 1 to 3 nm; and
a protective film formed on said FePt alloy nanoparticle layer.

9. A magnetic recording medium comprising:
a substrate;
an alloy nanoparticle layer containing alloy nanoparticles which are disposed at substantially uniform intervals on said substrate, have an average diameter of 2 to 6 nm, and are comprised of Fe, Pt, and an element selected from the group consisting of Ni, Co, Cu, Ag, Mn, and Pb; and
a protective film formed on said alloy nanoparticle layer.

10. A magnetic recording medium comprising:
a substrate;
a nanoparticle magnetic layer containing FePt alloy nanoparticles which are disposed at substantially uniform intervals on said substrate, and have an average diameter of 2 to 10 nm, and a carbon phase filling the voids between said FePt alloy nanoparticles; and
a protective film formed on said nanoparticle magnetic layer, wherein
the proportion of the number of carbon atoms contained in said carbon phase based on the sum of the number of metallic atoms constituting said FePt alloy nanoparticles and the number of said carbon atoms is in the range of from 50 at%, inclusive, to 85 at%, exclusive.

11. A method of manufacturing a magnetic recording medium, comprising the steps of:
dispersing FePt alloy nanoparticles and an organic mixture containing a carboxylic acid and an amine in a solvent selected from the group consisting of hexane, heptane, and octane, to obtain a coating liquid;
applying said coating liquid to a substrate;
drying said coating liquid to form, on said substrate, a magnetic nanoparticle layer comprised of said FePt alloy nanoparticles and said organic mixture filling the voids between said FePt alloy nanoparticles;
permitting a salt to be formed between said carboxylic acid and said amine; and
annealing said magnetic nanoparticle layer.

12. The method of manufacturing a magnetic recording medium as set forth in claim 11, wherein said step of permitting a salt to be formed between said carboxylic acid and said amine is comprised of the step of maintaining said magnetic nanoparticle layer in N₂ gas for not less than 5 days.

13. The method of manufacturing a magnetic recording medium as set forth in claim 11, wherein said step of permitting a slat to be formed between said carboxylic acid and said amine is comprised of the step of subjecting said magnetic nanoparticle layer to a baking treatment at a temperature of not lower than the boiling point of said solvent for a period of 5 to 60 min.

14. The method of manufacturing a magnetic recording medium as set forth in claim 11, wherein said step of permitting a salt to be formed between said carboxylic acid and said amine is comprised of the step of maintaining said magnetic nanoparticle layer in a vacuum for not less than 1 hr.

15. A method of manufacturing a magnetic recording medium, comprising the steps of:
dispersing FePt alloy nanoparticles and an organic mixture containing a carboxylic acid and an amine in a solvent selected from the group consisting of hexane, heptane, and octane, to obtain a coating liquid;
applying said coating liquid to a substrate;
drying said coating liquid to form, on said substrate, a magnetic nanoparticle layer comprised of said FePt alloy nanoparticles and said organic mixture filling the voids between said FePt alloy nanoparticles;
forming a carbon cap on said magnetic nanoparticle layer; and
annealing said magnetic nanoparticle layer.

16. A method of manufacturing a magnetic recording medium, comprising the steps of:
dispersing FePt alloy nanoparticles and an organic mixture containing a carboxylic acid and an amine in a solvent selected from the group consisting of hexane, heptane, and octane, to obtain a coating liquid;
forming a carbon substrate layer on a substrate;
applying said coating liquid to said carbon substrate layer;
drying said coating liquid to form, on said carbon substrate layer, a magnetic nanoparticle layer comprised of said FePt alloy nanoparticles and said organic mixture filling the voids between said FePt alloy nanoparticles; and
annealing said magnetic nanoparticle layer.

17. A magnetic recording medium comprising:
a substrate;
a carbon layer formed on said substrate;
a magnetic nanoparticle layer formed on said carbon layer and having an average grain diameter in the range of 2 to 10 nm and an inter-grain interval in the range of 0.2 to 5 nm; and
a carbon protective film formed on said magnetic nanoparticle layer, wherein
said magnetic nanoparticle layer is comprised of a plurality of mutually separated nanoparticles having a grain diameter variance of not more than 10%.

18. The magnetic recording medium as set forth in claim 17, wherein said magnetic nanoparticles contain two or more elements selected from the group consisting of Fe, Pt, Ni, Co, Cu, Ag, Mn, and Pb.

19. The magnetic recording medium as set forth in claim 18, wherein said magnetic nanoparticle layer contains said magnetic nanoparticles and a stabilizing ligand filling the voids between said magnetic nanoparticles, said stabilizing ligand being selected from the group consisting of carboxylic acid, sulfonic acid, sulfinic acid, phosphonic acid, and amine.

20. The magnetic recording medium as set forth in claim 17, wherein the film thickness of said carbon layer is in the range of 1 to 10 nm, and the film thickness of said carbon protective film is in the range of 1 to 5 nm.
